# EUROPEAN PATENT APPLICATION

(11) **EP 1 555 625 A1**
(43) Date of publication of application: **20.07.2005**
(21) Application number: 04028275.8
(22) Date of filing: 29.11.2004
(51) Int. Cl.: G06F 17/30

(54) **Query recognizer**

(30) Priority: 16.12.2003 US 736915
(71) Applicant: MICROSOFT CORPORATION, Redmond, Washington 98052 (US)
(72) Inventor: Calbucci, Marcelo Microsoft Corporation, Redmond Washington 98052 (US); Salas, Sally Microsoft Corporation, Redmond Washington 98052 (US)
(74) Representative: Grünecker, Kinkeldey, Stockmair & Schwanhäusser Anwaltssozietät

(57) **Abstract**

A system and method for executing a query on a plurality of data sources which may include remotely located data sources having specialized data. These data sources might include, for example, data relating to retail sales, travel, entertainment and the like. The data source may also contain only data that is local to a given community or group of communities. The system includes a pre-processor which accepts an input query and modifies its form to provide a resultant query. This modification can include corrections in spelling for example. The system classifies the resultant query based on the presence of classifier terms and user provided classification data from previously submitted queries or recognized patterns in the query. The system then selects a subset of data sources upon which to execute the query based on this query classification. The query is then executed on the selected data sources.

## Description

### Field of the Invention

The present invention relates to automated query analyzers for efficiently providing answers to queries.

### Background art

One goal of a query search engine is providing a rapid response to the query. An on line user faced with a slow responding search engine can react by trying to resubmit the search, stopping the search and going to another search engine, or perhaps trying to reformulate the search to seek faster results. It is desirable if the results can be returned to the user quickly enough to prevent the user from attempting these solutions to a perceived problem in the speed in obtaining a result.

A publication entitled "Clustering User Queries of a Search engine" to Wen et al. describes a process whose goal is to increase search engine retrieval accuracy. The Wen et al paper clusters queries so that a pre-formulated FAQ (frequently asked questions) document can be presented to the person asking the query. For example, if the clustering process determines a query is asking about 'new cars' then the 'new car' FAQ document is returned as a response to the 'new car' query. This approach presupposes the existence of a FAQ document for each query cluster and also presupposes the existence of a matching cluster for every query that is submitted to the search engine. The web site www.ask.com provides means whereby a user can ask for query results and this site may use techniques similar to those disclosed in the Wen et al article.

### Summary of the Invention

If analysis software that forms part of a query search engine can accurately identify the query according to its category, then the search engine can respond more rapidly to the query.

An exemplary system analyzes queries from a user and responds to the queries with data. A query processor evaluates a query and transmits a form of the query to another data source for creating a response to the modified form of the query. The system implements a recognizer component that evaluates the query or a modified form of the query and identifies a type of query. In on exemplary embodiment the query processor including a recognizer broker for sending the query to a specified one or more of the plurality of recognizers.

One such recognizer is a word or token match recognizer. The system matches query input words or tokens with words stored in a database and categorizes those words with a confidence level. The confidence level is derived from database records that define a history of user ratings for use previously submitted queries.

These and other objects, advantages and features of the invention are described in greater detail in conjunction with the accompanying drawings.

### Brief Description of the Drawings

Figure 1 is a schematic depiction of a computer system suitable for use with an exemplary embodiment of the present invention;
Figure 2 is a block diagram of a query recogonizer constructed in accordance with the exemplary embodiment of the present invention;
Figure 3 is a block diagram of a subcomponent of a query pre-processor; and
Figure 4 is a flow diagram of the query recognizer of Figure 2.

### Exemplary embodiment for practicing the invention

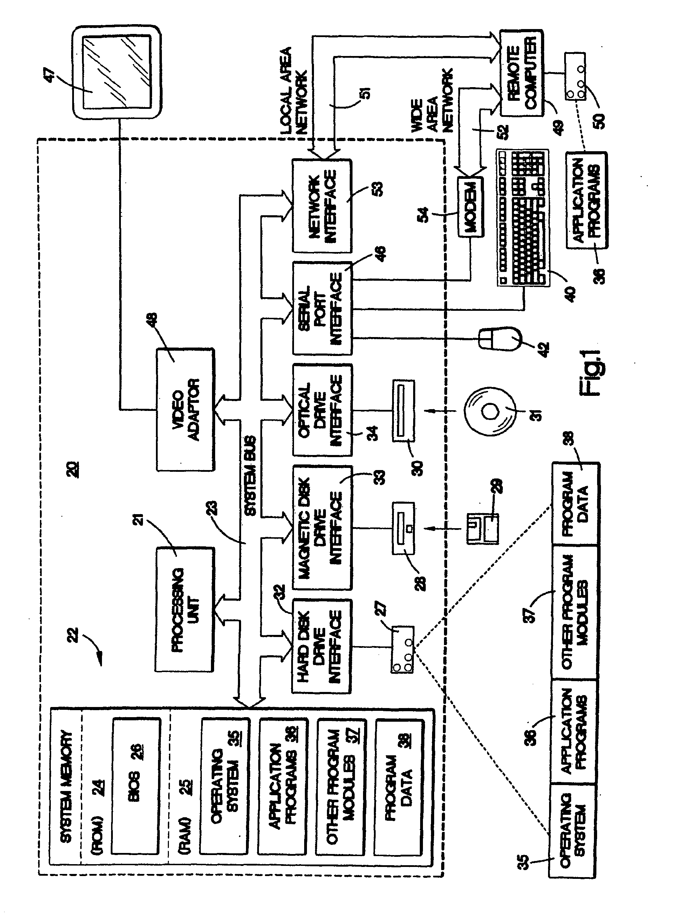

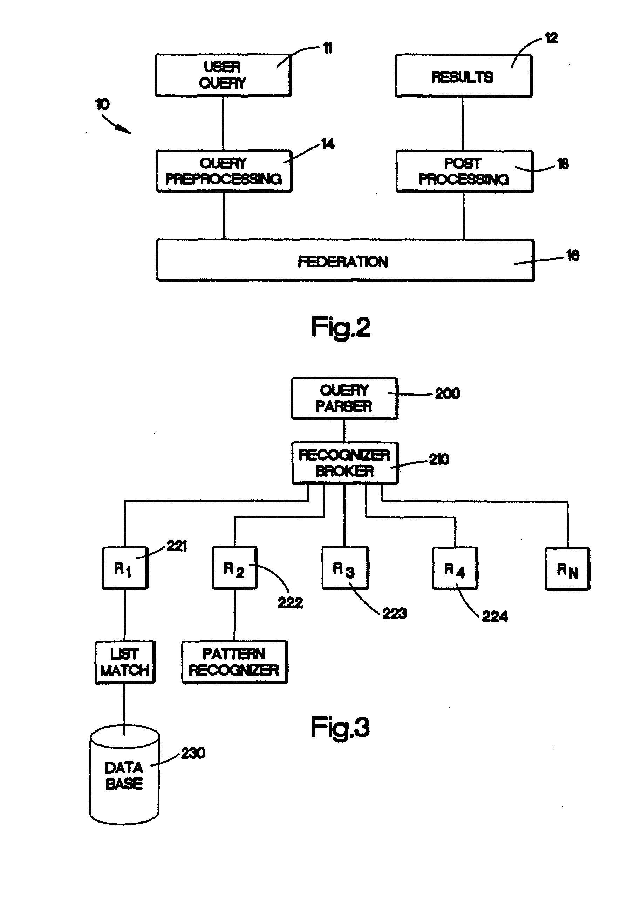

Figure 2 illustrates a schematic of a query analyzer constructed in accordance with one exemplary embodiment of the invention. The query analyzer 10 begins its analysis when it receives a query 11 from a user. Most typically, the analyzer is constructed in software executing on a computer system 20 (Figure 1) such as a server computer which in turn is coupled by means of communications connections to other servers or computers by means of a network. In a most typical example the user is logged onto his or her computer and communicates with a remote computer system acting as a server by means of the Internet wide area network.

The search engine software executing on the server 20, possibly in conjunction with other federated search engines, provides a rapid response to the query. The response is provided to the user in the form of search results 12, typically transmitted back to the user over a network such as the Intemet. The response can be formulated as a series of article or web site summaries with links to those articles or web sites embedded in the search results. A computer system 20 that can serve as a suitable query response computer is depicted in Figure 1 and described in greater detail below.

The exemplary computer system 20 includes software that defines the query processor 10 for evaluating the query. One possible response to receipt of a query 11 is to re-transmit a modified form of the query to another server that performs a search based on the modified form of the query. As an example, the other source of search results could be a server hosting a travel web site that provides data about airfares, hotels etc. It could be a religious web site that maintains a list of churches in a country. It could be a site dedicated to automobile information that in turn has links to car dealerships. Other, of course non exhaustive categories are: news, local, sports, encyclopedia, history, books, movies, entertainment etc.

The server computer system 20 depicted in Figure 1 may also directly evaluate the query and provide a response or result 12 based on the contents of a database maintained by the server 20. This database contains information in the form of an index of words obtained by a web crawler that searches the Internet cataloging page contents at thousands of sites. This scanning occurs on a periodic basis to assure it is an up to the date representation of the contents of the site. Regardless of whether the computer system 20 searches for query results or transmits the search request to another computer, a result 12 is formatted by the server 20 and transmitted back to the user. Since this result contains a list of links to other sites containing documents or information, the user can click on a document and the user's web browser is redirected to an Internet address pointed to by the link.

In order to efficiently utilize search engines at other locations, the computer system 20 utilizes a plurality of recognizers 220 (Figure 3) for evaluating the query or a modified form of the query for the purpose of identifying a type of the input query. Once the type of query is identified the analyzer federation program 16 decides which alternate site search engine can be sent a query or alternately decides that the query should be further evaluated by the computer system 20 that initially receives the query.

### Query Preprocessing

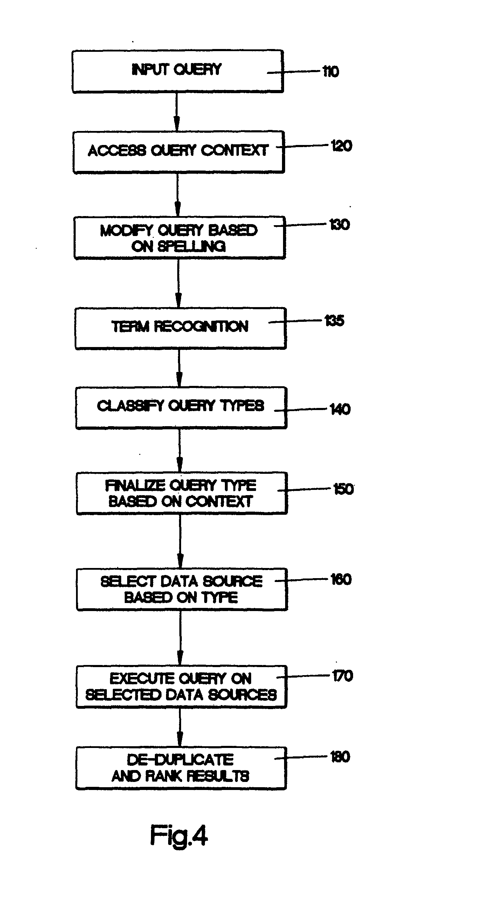

The server 20 includes a query processor component 14 that performs several functions on an input query. Figure 4 is a flow chart that depicts operation of the query processor 10. The query processor receives 110 an input query and accesses 120 query context information regarding the specific user such as the geographical and intemet (web page) origin of the query, web sites recently visited by the user, and queries recently entered by the user and the results to those queries that were selected by the user. A part of the query context information is contained in the information embedded in the address of the source computer from which the query originates. The address is a string of 3 2 bits broken up into fields. RFC #791 Section 3.2 promulgated by the IETF describes details of the IP addressing system.

Each Internet service provider (or Country or Company) obtains an IP range class A, B or C, and partitions the 32 bits available to it for its own needs. In most instances, it is possible to associate an IP to a city due to the presence of the company Internet connection location. This reverse lookup is not always accurate, for example, all AOL users have IP addresses originating in Virginia.

The query processor next performs several functions on the query to modify or augment the query to optimize analysis of the query. The purpose of this augmentation is to quickly return results that are likely most relevant to this particular user.

At a stage 130 the query processor performs a spell check on the query and either changes the spelling of terms in the query that are misspelled or augments the query with correctly spelled terms. The query processor scans the spell corrected query for terms that should be grouped as phrases 135. The query processor may use information about commonly executed queries to determine which terms should be grouped as phrases.

At step 140 the query processor identifies or recognizes words within a phrase that serve as indicators that the query is of a certain type such as a local query that is location sensitive or queries that are searching for items to be purchased. The identification of these words or terms may cause the query processor to augment the query with context specific information such as zip code or area code information based on the geographical origin from which the query originates.

At this stage, each phrase of a query is broken, stemmed and analyzed by a query parser 200 and recognizer broker 210 for concept or category matching. These concepts based strictly on content, in conjunction with past data collected for a particular user, identify possible federation results, i.e. where to broker the query for most efficient analysis. Federation is defined as the "handing off" of a query to a separate service (either internal or external) in order to provide data pertinent to the query for producing a result to the query. During a recognition phase a number of query recognizers 221, 222, 223, 224 etc evaluate the query and determine for the recognizer broker 210 a probability of the query belonging to one of a predefined set of categories.

Three separate modules or components are employed at the parser level of query pre-processing. A word breaker separates each phrase of a query into separate words and stores these words in an output array or list. A stemmer component attempts to find a root of each word from the word breaker output array and will create a corresponding array of root words. Finally, a recognizer component will attempt to match the root words (or actual words for words having no root) against intent lists stored in a database 230 to discover the intent of the words. The recognizer component also searches for patterns using an algorithmic query intent recognizer. The results of this analysis provides a category and degree of confidence as a percentage. Consider the query entered by a user of the form "compare price Buick and Satturn"

Table 1 below is a listing of the results of this analysis of the recognizer 221 on this query.

**Table 1**

| **Root or Word** | **Category** | **Confidence** |
|---|---|---|
| Satturn or Saturn | Cars | 68% |
| Sattum or Saturn | Science | 46% |
| Satturn or Saturn | Mythology | 14% |
| Buick | Cars | 91% |
| Price | Shopping | 99% |
| Compare | Shopping | 50% |

At a stage 150 (Figure 4), the user's likely intent is determined based on the modified query and in light of past queries. For example, if the user has recently been entering numerous queries searching for cars or if the query has been entered in a web search box on a carpoint web page, the "car " meaning of the term Saturn is most appropriate and will be used to provide a result.

Based on the finalized query and determined query type, the query processor selects a set of data sources upon which to execute the query in step 160. The query is a modified query of the form "compare price Saturn and Buick cat: cars: 80." This form of the query indicates that the preprocessor 14 has corrected the spelling of the word "Saturn" and augmented the query with a confidence level of 80% that the query concerns the category "cars."

At a stage 170 the query (as enhanced by the recognizer) may be executed concurrently on the data sources or preferred data sources may be accessed first and other data sources used in the case the preferred data sources do not provide sufficient results or "time out" due to overload or technical difficulties.

The data source or provider can be an internal provider running on a web server 20 or an external provider such as Encarta, Expedia, Overture, Inktomi, Yellow Pages etc. The data source is provided the enhanced query and the query configuration based such as "en-us" meaning English language query originating in the United States. From a list of all possible data sources, two lists are built on the enhanced query and the query configuration. A first list is a list of sources that do not depend on other data sources and a second list of those sources that do depend on other sources. Sources on the first list are called first in parallel and then those sources having dependency on sources in the first list are called.

In order to provide results to popular queries quickly, the query processor 10 caches the results to popular queries. Queries that seek results similar to the queries whose results were cached are directed first to the appropriate cache. The caches may be updated at different intervals depending on the rate at which the cached information changes, i.e. daily or hourly. Queries that have been identified as local queries are directed to a yellow pages type directory data source. Queries that have been identified as car queries are directed to car selling data sources.

The returned results are de-duplicated, and ranked by a post processing component 18. The results are presented to the user based on context information and query type. The presentation of the ranked results may be personalized based on recorded user preferences. The ranked results may also be recorded to an instrumentation database that records original queries, resultant queries, results, and which results were selected by the user. The instrumentation database is used to monitor the success of the search engine.

### Recognizer Broker 210

Returning to the recognizer broker 210 a number of points are highlighted. First, there are a number of recognizers 221, 222 etc. In one embodiment the broker 210 merely causes each recognizer to evaluate the modified form of the query and return a predicted category of query. In an alternate embodiment, the broker 210 chooses the recognizer based on other information derived from the source of the query. If for example the address of the user indicates a country source as 'Spain' sending the query to a list match recognizer of English language words is inefficient so that the broker uses the information available to it to make an intelligent choice about the recognizers to utilize. Some of the brokers are not word based but are algorithmic and use heuristics rules to search for intent such as recognized patterns. If a string of five digits appears in the query for example, the recognizer for identifying zip codes will respond with a high level of confidence that this is a local search query relating to searches regarding a particular area of the country. In a similar fashion a recognizer searches for telephone patterns.

In the exemplary embodiment, the recognizers are of two types, algorithmic or list match. An algorithmic query intent recognizer uses heuristic rules to determine what the user meant by the words that he or she typed. One example is phone numbers. The rule to detect if a phone number was typed could be: three digits followed by a separator followed by seven digits or three digits followed by a separator followed by four more digits. So, if the user types "(425) 882-8080" the recognizer borker flags this query as a phone number with a high degree of confidence. This could help the federation broker which source or provider to contact. Other examples of algorithmic query intent recognizers are:
- Phone numbers - e.g. "find name of (425) 880-8080"
- Zip Code - e.g. "Chinese Restaurant 98052"
- E-mail address - e.g. "Developer mcalbu@microsoft.com"
- URL - e.g."how to go to yahoo.com"
- UPS Number - "Track Z9857103753300"

As mentioned above the list match query intent recognizers are based on dictionary lookup schemes. For each entry in the dictionary, the database has a word or phrase by itself, the candidate category and the probability of a match. One subset of the entries in the database 230 might include the following entries.
- Paris -city (80%); hotel (40%)
- Las Vegas - city (90%)
- Hotel - travel (80%)
- Jaguar - car (50%)
- Window-car (30%)
- Jaguar - animal (50%)
- Restaurant - local (60%)
- Hair Cut - local (50%)

If a user types a query like "Paris Hotel in Las Vegas", an appropriate query recognizer will indicate that specific parts of the query contain city (Paris, Las Vegas), contain hotel (Paris) and contain travel (Hotel). The recognizer reports not only what category each word or phrase belongs to, but the position on the phrase. On the example above, the results of this query of "Paris Hotel in Las Vegas" would be:
- Characters 1-5: Hotel (40%)
- Characters 1-5: City (80%)
- Characters 7 - 11: Travel (80%)
- Characters 16-24 (City (90%)
The recognizer broker passes this back to a federation processor to take specific actions regarding assignment of the query.

The confidence levels attributed to words within a query by the recognizer 221 for example (the English language list match recognizer) is based on a history of previous searches. The database 230 maintains a list of words and categories for words based on the search history maintained in the database. From the above example, the database knows from past experience that when a user is presented results from a query that contains the word "Saturn" he or she is likely to be interested in the 'Car' category 68% of the time because he or she clicks on a link to such a category with that frequency when presented a result of a query that contains the word "Saturn."

The results of Table 1 are summarized as a result having combined confidence level based on the words of the query. Two words had a relatively high confidence level for cars and two words had a high confidence level for shopping. The federation component 16 can send the query to two specialized search engines, one relating to shopping and one to cars. It may also know that there is a special search site suitable for "car shopping."

Other uses of the Query Intent Recognition phase would be wherein the Web Server executing the query intent recognizer could selectively display (or not display) advertisements if a certain category appears. For example, the server might display a "Toyota ad" on the "Results" Web page if the category of the query was "cars." Another response a choice not to display content. For example, if the recognizer analyzes a query and determines it contains an "adult term", such as "live sex" the software could use this information to suppress specific federations or suppress elements of the results of the search results page. At the present time server software presenting ad promotions can extract portions of the query verbatim and add those extracted portions for advertisers paying for such a service. Use of the recognizer could enhance such a service by automatically added content not contained in the query as well as suppressing ads for certain customers in the event the query contains offensive language.

Alternate exemplary embodiments are not limited to query categorization and concern query augmentation. Consider these two examples:

Example 1: A users enters the phrase "Restaurants in Redmond, WA" by means of a search text box in his or her browser. The recognizer augments the query to form the phrase "Restaurants in Redmond, WA zip:98052:90 cat:local:60", where "zip:98052:90"means that there is a 90% chance of this referring to zip code 98052, a useful piece of information for a search engine. Furthermore, the categorization of local:60 means with 60% confidence this is a request for local search content.

Example 2: The user types "News about Iraq" and the recognizer augments the query this way: "News about Iraq cat: news: 80 ranking: date: 30" where "cat: news: 80" means there is an 80% chance of being a news category and "ranking:date: 30" means that the ranker should use of weight of 30% for the date field.

### Computer system 20

As seen by referring to Figure 1 a representative computer system 20 for use in practicing the present invetion includes one or more processing units 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures.

The system memory includes read only memory (ROM) 24 and random access memory (RAM) 25. A basic input/output system 26 (BIOS), containing the basic routines that help to transfer information between elements within the computer 20, such as during start-up, is stored in ROM 24.

The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer-readable media provide nonvolatile storage of computer readable instructions, data structures, program modules and other data for the computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAM), read only memories (ROM), and the like, may also be used in the exemplary operating environment.

A number of program modules including the data mining software component 12 may be stored on the hard disk, magnetic disk 29, optical disk 31, ROM 24 or RAM 25, including an operating system 35, one or more application programs 36, other program modules 37, and program data 38. A user may enter commands and information into the computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port or a universal serial bus (USB). A monitor 47 or other type of display device is also connected to the system bus 23 via an interface, such as a video adapter 48. In addition to the monitor, personal computers typically include other peripheral output devices (not shown), such as speakers and printers.

The computer 20 may operate in a networked environment using logical connections to one or more remote computers, such as a remote computer 49. The remote computer 49 may be another personal computer, a server, a router, a network PC, a peer device or other common network node, and typically includes many or all of the elements described above relative to the computer 20, although only a memory storage device 50 has been illustrated in Figure 1. The logical connections depicted in Figure 1 include a local area network (LAN) 51 and a wide area network (WAN) 52. Such networking environments are commonplace in offices, enterprise-wide computer networks, intranets and the Internet.

When used in a LAN networking environment, the computer 20 is connected to the local network 51 through a network interface or adapter 53. When used in a WAN networking environment, the computer 20 typically includes a modem 54 or other means for establishing communications over the wide area network 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing a communications link between the computers may be used.

It can be seen from the foregoing description that building and maintaining statistical information on intermediate query results can result in more efficient query plans. Although the present invention has been described with a degree of particularity, it is the intent that the invention include all modifications and alterations from the disclosed design falling within the spirit or scope of the appended claims.

## Claims

1. A system for analyzing queries from a user and responding to said queries comprising:
a) a query processor for evaluating an input query and transmitting a modified form of said query to a data source for creating a response to the modified form of said query; and
b) a plurality of recognizers for evaluating the query or a modified form of the query and identifying data in the query;
c) said query processor including a recognizer broker for sending the query to a specified one or more of the plurality of recognizers.

2. The system of claim 1 wherein said recognizer broker categorizes the query as a certain type query with a certain degree of certainty.

3. The system of claim 1 wherein said query recognizer adds information to create a modified form of the input query based on data identified in said query.

4. The system of claim 3 wherein the query recognizer adds a category to the input query.

5. The system of claim 3 wherein the query recognizer adds information related to information contained in the input query.

6. The system of claim 1 additionally comprising a web crawler for searching documents and categorizing said documents and a database for providing results based upon an input from the query processor.

7. The system of claim 1 wherein the query processor modifies the query to include a category before transmitting the modified query to a data source.

8. The system of claim 1 wherein the query processor changes spelling of misspelled words in the query.

9. The system of claim 1 wherein one of the recognizers matches query input words with words stored in a database and categorizes said words with a confidence level.

10. The system of claim 9 wherein the database includes a history of user ratings for use in establishing the confidence level.

11. The system of claim 9 wherein the history of user ratings are based on user choices of previous results presented based on previously submitted queries.

12. The system of claim 10 wherein the database contains an index of words and an indication of a category of query for said words wherein multiple categories exist for the same word.

13. The system of claim 1 including a pattern recognizer for recognizing a pattern of characters in an input query for categorizing said query.

14. The system of claim 1 wherein one or more pattern recognizers contain a database of terms of specified languages for identification in said recognizer.

15. A system for analyzing queries from a user and responding to said queries with data comprising:
a) a query processor for evaluating the query and transmitting a form of said query to a data source for creating a response to the modified form of said query; and
b) a query recognizer for evaluating the query or a modified form of the query and identifying a query type based on tokens identified in said query;
c) a database that stores tokens and associates a confidence level for a type of query containing said tokens and provides a confidence level to said query recognizer when a match between a token in an input query and a token in said database is confirmed.

16. The system of claim 15 wherein the query processor modifies a form of the query before transmitting the modified form to said data source, said modified form including a category of query indicator.

17. A method of evaluating a query comprising:
a) evaluating an input query and transmitting a modified form of said query to a data source for creating a response to the modified form of said query by evaluating the query using a specified one or more of a plurality of query recognizers that evaluate tokens in the query to generate the modified form of the query.

18. The method of claim 17 wherein said input query is identified as a query of a certain type with a certain degree of certainty.

19. The method of claim 17 comprising adding information to create a modified form of the input query based on data identified in said input query.

20. The method of claim 17 comprising adding a category to the input query.

21. The method of claim 17 comprising adding information related to information contained in the input query.

22. The method of claim 17 additionally comprising searching for documents and categorizing said documents and maintaining a database for providing probabilities based upon an input derived from the query processor based on a content of the input query.

23. The method of claim 17 wherein the query processor changes spelling of misspelled words in the input query.

24. The method of claim 17 wherein one of the query recognizers matches query input words with words stored in a database and categorizes said words with a confidence level.

25. The method of claim 24 wherein the database includes a history of user ratings for use in establishing the confidence level.

26. The method of claim 25 wherein the history of user ratings are based on user choices of previous results presented based on previously submitted input queries.

27. The method of claim 26 wherein the database contains an index of words and an indication of a category of query for said words wherein multiple categories exist for the same word.

28. The method of claim 17 comprising recognizing a pattern of characters in an input query for modifying said query.

29. The method of claim 28 wherein one or more pattern recognizers contain a database of terms of specified languages for identification in said recognizer.

30. A computer readable medium having instructions for executing a query on a plurality of data sources comprising instructions for:
preprocessing the query to form a resultant query;
classifying the resultant query based on the presence of classifier terms and user provided classification data from previously submitted queries; and
selecting a subset of data sources upon which to execute the query based on query classification.
